# FASCICULE DE BREVET EUROPEEN

(11) **EP 3 640 843 B1**
(45) Date de publication et mention de la délivrance du brevet: **20.12.2023**
(21) Numéro de dépôt: 19306348.4
(22) Date de dépôt: 16.10.2019
(51) Int. Cl.: G06V 40/12, G06V 10/24, G06V 10/82, G06V 10/44

(54) **PROCÉDÉ D'EXTRACTION DE CARACTÉRISTIQUES D'UNE EMPREINTE DIGITALE REPRÉSENTÉE PAR UNE IMAGE D'ENTRÉE**
VERFAHREN ZUR EXTRAKTION VON MERKMALEN EINES FINGERABDRUCKS, DER DURCH EIN EINGANGSBILD DARGESTELLT WIRD
METHOD FOR EXTRACTING CHARACTERISTICS OF A FINGERPRINT REPRESENTED BY AN INPUT IMAGE

(30) Priorité: 19.10.2018 FR 1859682
(43) Date de publication de la demande: 22.04.2020
(73) Titulaire: Idemia Identity & Security France, 92400 Courbevoie (FR)
(72) Inventeur: MABYALAHT, Guy, 92400 COURBEVOIE (FR); KAZDAGHLI, Laurent, 92400 COURBEVOIE (FR)
(74) Mandataire: Idemia

(56) Documents cités:
- SCHUCH PATRICK ET AL: "Unsupervised Learning of Fingerprint Rotations", 2018 INTERNATIONAL CONFERENCE OF THE BIOMETRICS SPECIAL INTEREST GROUP (BIOSIG), GESELLSCHAFT FUER INFORMATIK, 26 septembre 2018 (2018-09-26), pages 1-6, XP033460036, DOI: 10.23919/BIOSIG.2018.8553096
- OUYANG JIAHONG ET AL: "Fingerprint pose estimation based on faster R-CNN", 2017 IEEE INTERNATIONAL JOINT CONFERENCE ON BIOMETRICS (IJCB), IEEE, 1 octobre 2017 (2017-10-01), pages 268-276, XP033308623, DOI: 10.1109/BTAS.2017.8272707

## Description

### DOMAINE TECHNIQUE GENERAL

La présente invention concerne le domaine de la biométrie, et propose en particulier un procédé d'extraction de caractéristiques recherchées d'une empreinte digitale représentée par une image d'entrée, en vue d'un traitement biométrique de l'image d'entrée.

### ETAT DE L'ART

L'authentification/identification biométrique consiste à reconnaître un individu sur la base de traits biométriques de cet individu tels que les empreintes digitales (reconnaissance digitale), l'iris ou le visage (reconnaissance faciale).

Les approches biométriques classiques utilisent les informations caractéristiques du trait biométrique extraites à partir de la biométrie acquise, appelées « features », et l'apprentissage/classification est réalisé sur la base de la comparaison de ces caractéristiques.

En particulier, dans le cas de la reconnaissance digitale, les images d'extrémité de doigt sont traitées de sorte à extraire les caractéristiques d'une empreinte qui peuvent être classées en trois catégories :
- Le niveau 1 définit le motif général de cette empreinte (une des quatre classes : boucle à droite, boucle à gauche, arche et spirale), et le tracé global des crêtes (on obtient en particulier une carte d'orientation dite « Ridge Flow Matrix », carte RFM, qui représente en chaque point de l'empreinte la direction générale de la crête).
- Le niveau 2 définit les points particuliers des empreintes appelés minuties, qui constituent des « événements » le long des crêtes (fin d'une crête, bifurcation, etc.). Les approches classiques de reconnaissance utilisent essentiellement ces caractéristiques.
- Le niveau 3 définit des informations plus complexes telles que la forme des crêtes, les pores de la peau, des cicatrices, etc.

On appelle ainsi un « codage » le procédé d'extraction des caractéristiques d'une empreinte (sous la forme de cartes de caractéristiques, ou « feature maps »), lesquelles permettent de composer une signature appelée « template » encodant l'information utile à la phase finale de classification. Plus précisément, on va réaliser la classification par comparaison des cartes de caractéristiques obtenues avec une ou plusieurs carte(s) de caractéristiques de référence associée(s) à des individus connus.

On dispose aujourd'hui de « codeurs » réalisant efficacement cette opération d'extraction de caractéristiques, i.e. d'algorithmes procédant à un ensemble de traitements :
- Amélioration de l'image (rehaussement de contraste, réduction du bruit, etc.) ;
- Utilisation de filtres dédiés (Gabor de différentes résolutions, dérivateurs, etc.) ;
- Utilisation de méthodes de décisions (seuillage de binarisation, extraction de points, etc.)

Une piste est l'utilisation de réseaux de neurones, lesquels sont déjà massivement utilisés pour la classification de données.

Après une phase d'apprentissage automatique (généralement supervisé, c'est-à-dire sur une base de données de référence déjà classifiées), un réseau de neurones « apprend » et devient tout seul capable d'appliquer la même classification à des données inconnues.

Les réseaux de neurones à convolution, ou CNN (Convolutional Neural Networks) sont un type de réseau de neurones dans lequel le motif de connexion entre les neurones est inspiré par le cortex visuel des animaux. Ils sont ainsi particulièrement adaptés à un type particulier de classification qui est l'analyse d'image, ils permettent en effet avec efficacité la reconnaissance d'objets ou de personnes dans des images ou des vidéos, en particulier dans des applications de sécurité (surveillance automatique, détection de menace, etc.).

Et, dans le domaine de l'authentification/identification biométrique, un CNN peut être entraîné à reconnaître un individu sur la base de traits biométriques de cet individu dans la mesure où ces données sont manipulées sous formes d'images.

Cependant, si de telles approches ont permis des avancées majeures par exemple en reconnaissance de visages, leur application à la reconnaissance d'empreintes digitales se heurte aux spécificités inhérentes aux empreintes digitales. En effet, si la majorité des empreintes acquises le sont en environnement contrôlé et avec une orientation correcte, dans certains cas (images d'empreintes latentes par exemple sur une scène de crime, images issues d'acquisition sur smartphone, etc.) l'acquisition et spécifiquement l'orientation ne sont pas maîtrisées. Et si l'extraction de caractéristiques reste possible sur une empreinte mal orientée, le matching (i.e. la mise en correspondance avec les caractéristiques d'une empreinte de référence) s'avère difficile voire impossible si les empreintes représentées par l'image d'entrée et les empreintes de référence ne sont pas dans le même repère.

Ainsi, lors d'une évaluation sur une base d'empreintes latentes, en utilisant un extracteur/matcher développé pour une empreinte parfaitement recalée, une détérioration des performances a été observée, passant de 36% à 0%, à mesure qu'augmentaient les différences d'orientation entre la pose des empreintes latentes et l'orientation de l'image d'empreinte de référence.

On note qu'il est connu de recaler une image d'empreinte digitale en tant que « pré-traitement » par des algorithmes de traitement de l'image, mais cette approche n'est pas très efficace et impose de se servir d'une image (ou modèle) de référence.

On note également qu'il est connu d'utiliser des CNN « de détection » tels que R-CNN, son dérivé Faster R-CNN (voir le document Fingerprint Pose Estimation Based on Faster R-CNN, Jiahong Ouyang *et al*) ou encore YOLO, pour estimer la pose d'une empreinte, c'est-à-dire la position de son centre et son orientation. Plus précisément, un CNN de détection est capable de détecter des éléments d'intérêt (objets) de diverses catégories dans une image sous la forme d'une « boite englobante » (bounding box) : un premier module (de type VGG-16 dans Faster R-CNN) à nouveau de « pré-traitement » extrait des zones candidates de l'image d'entrée comme autant de boites englobantes possibles d'un élément d'intérêt, et un module de « post-traitement » sélectionne/classifie les boites englobantes les plus probables (i.e. détermine la catégorie de l'élément d'intérêt dans la boite). Pour utiliser un CNN de détection pour estimer une orientation, il suffit de considérer diverses orientations d'empreintes comme autant de catégories différentes d'éléments d'intérêt. Ainsi une fois la meilleure boite englobante identifiée pour une empreinte dans l'image d'entrée, on extrait le centre de la boite englobante prédite et la catégorie associée pour en déduire la pose correspondante.

Une telle approche « indirecte » reste toutefois très lourde en termes de puissance nécessaire et les blocs de traitement d'image tels que VGG-16 ou VGG-19 sont particulièrement massifs. En outre, les résultats d'une telle approche sont perfectibles, en particulier si l'empreinte n'est pas de bonne qualité.

Schuch, "Unsupervised Learning of Fingerprint Rotations", 2018, a exposé un CNN d'estimation de rotation d'empreinte digitale, mais qui requiert 19 couches, donc est coûteux en calculs.

Il serait par conséquent souhaitable de disposer d'une solution plus performante d'extraction de caractéristiques d'une empreinte digitale.

### PRESENTATION DE L'INVENTION

Selon un premier aspect, la présente invention concerne un procédé d'extraction de caractéristiques recherchées d'une empreinte digitale représentée par une image d'entrée, le procédé étant caractérisé en ce qu'il comprend la mise en oeuvre, par des moyens de traitement de données d'un équipement client, d'étapes de :
(a) Estimation d'au moins un écart angulaire candidat d'une orientation de ladite image d'entrée par rapport à une orientation de référence, au moyen d'un réseau de neurones à convolution, CNN ;
(b) Recalage de ladite image d'entrée en fonction dudit écart angulaire candidat estimé, de sorte que l'orientation de l'image recalée coïncide avec ladite orientation de référence ;
(c) Traitement de ladite image recalée de sorte à extraire lesdites caractéristiques recherchées de l'empreinte digitale représentée par ladite image d'entrée.

Selon d'autres caractéristiques avantageuses et non limitatives :
- ledit CNN comprend un ensemble de couches de convolution successives présentant une taille de filtre décroissante et un nombre de filtres décroissant ;
- l'étape (a) comprend l'identification d'au moins une classe potentielle d'écart angulaire d'orientation de ladite image d'entrée par rapport à l'orientation de référence parmi une pluralité de classes potentielles d'écart angulaire prédéterminées, chaque classe potentielle d'écart angulaire étant associée à une valeur d'écart angulaire représentative de la classe, le ou les écarts angulaires candidats estimés ayant pour valeurs la ou les valeurs représentatives de la ou les classes identifiées ;
- chaque classe est définie par un intervalle de valeurs d'écart angulaire ;
- lesdits intervalles sont continus et forment une partition d'une plage donnée d'écarts angulaires d'orientation possibles ;
- lesdits intervalles sont tous de même taille ;
- l'étape (a) comprend la détermination d'un vecteur d'orientation de ladite image d'entrée associant à chacune de ladite pluralité de classes potentielles d'écart angulaire un score représentatif de la probabilité d'appartenance de ladite donnée d'entrée à ladite classe potentielle d'écart angulaire ;
- le procédé comprend une étape (a0) préalable d'apprentissage, par des moyens de traitement de données d'un serveur, à partir d'une base d'images d'empreintes digitales déjà associées chacune à une classe de ladite pluralité de classes potentielles d'écart angulaire prédéterminées, de paramètres dudit CNN ;
- ledit apprentissage utilise une fonction de coût de type Sigmoïde ;
- une image recalée est générée à l'étape (b) pour chaque écart angulaire candidat estimé, l'étape (c) étant mise en oeuvre pour chaque image recalée ;
- ledit CNN est de type réseau résiduel ;
- l'étape (c) est également mise en oeuvre sur l'image d'entrée non recalée ;
- lesdites caractéristiques recherchées à extraire de l'empreinte digitale représentée par ladite image d'entrée comprennent la position et/ou l'orientation de minuties ;
- ladite empreinte digitale représentée par l'image d'entrée est celle d'un individu, le procédé comprenant en outre une étape (d) d'identification ou d'authentification dudit individu par comparaison des caractéristiques recherchées extraites de l'empreinte digitale représentée par ladite image d'entrée, avec les caractéristiques d'empreintes digitales de référence.

Selon un deuxième et un troisième aspect, l'invention propose un produit programme d'ordinateur comprenant des instructions de code pour l'exécution d'un procédé selon le premier aspect d'extraction de caractéristiques recherchées d'une empreinte digitale représentée par une image d'entrée ; et un moyen de stockage lisible par un équipement informatique sur lequel un produit programme d'ordinateur comprend des instructions de code pour l'exécution d'un procédé selon le premier aspect d'extraction de caractéristiques recherchées d'une empreinte digitale représentée par une image d'entrée.

### PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :
- la figure 1 est un schéma d'une architecture pour la mise en oeuvre du procédé selon l'invention ;
- la figure 2 représente un exemple de réseau de neurones à convolution pour la mise en oeuvre du procédé selon l'invention ;
- la figure 3 représente un exemple de vecteur d'orientation obtenu en utilisant ledit réseau de neurones à convolution ;
- les figures 4a-4b illustrent deux tests de performances de différents modes de réalisation d'un procédé selon l'invention.

### DESCRIPTION DETAILLEE

### Principe et architecture

Le présent procédé propose un procédé d'extraction de caractéristiques recherchées d'une empreinte digitale représentée par une image d'entrée. Ce procédé consiste typiquement en un « codage » de l'empreinte, i.e. lesdites caractéristiques recherchées à extraire sont typiquement des caractéristiques « biométriques », c'est-à-dire les caractéristiques « finales » permettant de composer un template de l'empreinte digitale en vue de faire de classification (identification/authentification d'individu par comparaison des caractéristiques recherchées extraites de l'empreinte digitale représentée par ladite image d'entrée, avec les caractéristiques d'empreintes digitales de référence, voir plus loin). A ce titre lesdites caractéristiques recherchées décrivent typiquement des minuties, c'est-à-dire qu'elles comprennent la position et/ou l'orientation des minuties. Toutefois, on comprendra que le présent procédé n'est pas limité à ce mode de réalisation, et toutes les caractéristiques possiblement d'intérêt en biométrie peuvent être extraites à l'issue de ce procédé.

Le présent procédé se distingue en ce qu'il propose une étape (a) d'estimation directe (à partir de l'image d'entrée) d'au moins un écart angulaire candidat d'une orientation de ladite image d'entrée par rapport à une orientation de référence, au moyen d'un réseau de neurones à convolution, CNN. On reviendra plus loin sur la notion d'estimation « directe », on comprendra qu'elle signifie sans aucun pré-traitement de l'image d'entrée.

Comme expliqué précédemment, le matching (i.e. la mise en correspondance avec les caractéristiques d'une empreinte de référence) s'avère difficile sur des empreintes mal orientées.

L'idée du présent procédé est de permettre dans une étape (b) le recalage de ladite image d'entrée en fonction dudit écart angulaire candidat estimé, de sorte que l'orientation de l'image recalée coïncide avec ladite orientation de référence.

Ainsi, l'extraction des caractéristiques peut être mise en oeuvre sur une image recalée « bien orientée » de sorte à obtenir un procédé robuste aux variations d'orientation.

On comprend que l'orientation dite de référence correspond à une orientation arbitrairement choisie telle que celle dans laquelle le doigt est vertical et dirigé vers le haut, dite « Nord-Sud », i.e. l'orientation naturelle lorsque l'on presse le doigt sur un capteur dans de bonnes conditions, correspond à celle habituelle des bases d'empreintes de référence. Pour reformuler, l'orientation de référence est préférentiellement fixe par rapport à l'orientation du doigt, en particulier égale à l'orientation du doigt, mais on comprendra qu'on peut partir de n'importe quelle orientation de référence.

L'écart angulaire d'orientation peut être exprimé comme une valeur d'angle, par exemple dans le sens trigonométrique (positif lorsque l'image est tournée dans le sens inverse des aiguilles d'une montre, négatif sinon).

Il peut être par exemple choisi dans une plage [0°,360°] ou une plage [-180°, +180°] de manière équivalente. Par ailleurs, une plage d'étendue 360° est préférée dans la mesure où elle correspond à l'ensemble des orientations possibles, mais on comprendra que l'on peut éventuellement travailler sur une plage plus réduite correspondant à l'essentiel des orientations constatées, par exemple [-45°, +45°]. En effet, dans une application de type capteur d'empreintes digitales de smartphone, il est rarissime d'avoir un écart d'orientation de 180°, i.e. une empreinte totalement à l'envers, mais par contre il est très courant d'avoir des écarts de 10°-20° en valeur absolue par rapport à l'orientation de référence. Alternativement, dans l'analyse des empreintes latentes (scène de crime par exemple), on peut trouver n'importe quelle orientation d'empreinte.

Comme expliqué précédemment, il est connu de recaler une image d'empreinte digitale en tant que « pré-traitement » par des algorithmes de traitement de l'image, mais il a été découvert qu'il était possible de réaliser ce recalage de façon très efficace avec des réseaux de neurones, mais surtout sans le besoin de se servir d'une image (ou modèle) de référence.

Aussi, il est connu d'utiliser des CNN « de détection » tels que Faster R-CNN (voir le document Fingerprint Pose Estimation Based on Faster R-CNN, Jiahong Ouyang *et al.*) ou encore YOLO, pour estimer la pose d'une empreinte, c'est-à-dire la position de son centre et son orientation. Cependant, cette approche « indirecte » reste toutefois très lourde en termes de puissance nécessaire et ses résultats sont perfectibles, en particulier si l'empreinte n'est pas de bonne qualité. Comme l'on verra plus loin, un autre avantage de la présente approche est ainsi que les écarts d'orientation peuvent être extraits automatiquement, sans informations a priori sur leur nature, et surtout y compris lorsque l'empreinte est dégradée ou présente un type « whorl » (c'est-à-dire un verticille, appelé aussi spire ou tourbillon) qui ne permet pas de distinguer la gauche et la droite contrairement à un type « arche ».

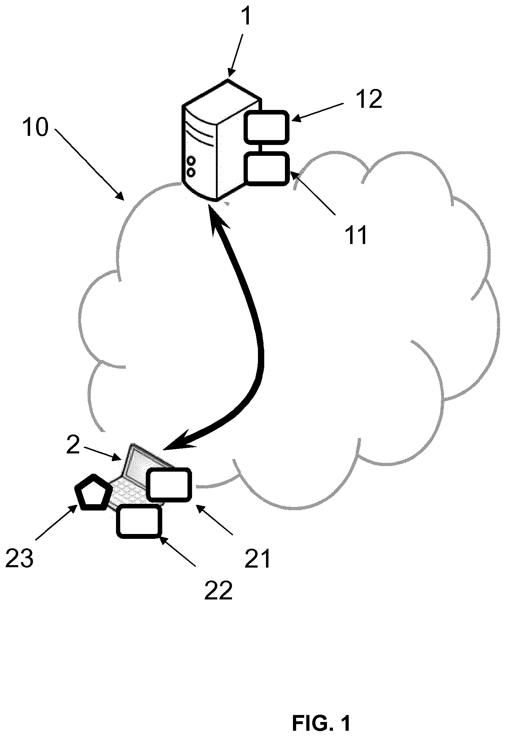

Le présent procédé est mis en oeuvre au sein d'une architecture telle que représentée par la **figure 1****,** grâce à un serveur 1 et un client 2. Le serveur 1 est l'équipement d'apprentissage (mettant en oeuvre l'apprentissage du CNN) et le client 2 est un équipement de classification (mettant en oeuvre le présent procédé d'extraction de caractéristiques recherchées d'une empreinte digitale), par exemple un terminal d'un utilisateur.

Il est tout à fait possible que les deux équipements 1, 2 soient confondus, mais de façon préférée le serveur 1 est celui d'un fournisseur de solution de sécurité, et le client 2 un équipement grand public personnel, notamment un smartphone, un ordinateur personnel, une tablette tactile, un coffre-fort, etc. ; ou un équipement d'acquisition d'empreintes latentes.

Dans tous les cas, chaque équipement 1, 2 est typiquement un équipement informatique distant relié à un réseau étendu 10 tel que le réseau internet pour l'échange des données. Chacun comprend des moyens de traitement de données 11, 21 de type processeur, et des moyens de stockage de données 12, 22 telle qu'une mémoire informatique, par exemple une mémoire flash ou un disque dur.

Le serveur 1 stocke une base de données d'apprentissage, i.e. un ensemble d'images d'empreintes digitales pour lesquelles on connait l'orientation (voir plus loin comment la représenter) par opposition aux images dites d'entrée que l'on cherche justement à traiter.

L'équipement client 2 comprend avantageusement un scanner d'empreintes digitales 23, de sorte à pouvoir directement acquérir ladite image d'entrée, typiquement pour qu'un utilisateur puisse s'authentifier.

### CNN

Un CNN contient généralement quatre types de couches traitant successivement l'information :
- la couche de convolution qui traite des blocs de l'entrée les uns après les autres ;
- la couche non linéaire qui met en oeuvre une fonction d'activation permettant d'ajouter de la non linéarité au réseau et donc d'avoir des fonctions de décision beaucoup plus complexes ;
- la couche de mise en commun (appelée « pooling ») qui permet de regrouper plusieurs neurones en un seul neurone ;
- la couche entièrement connectée qui relie tous les neurones d'une couche à tous les neurones de la couche précédente (pour de la classification).

Les couches non-linéaires sont souvent précédées d'une couche de normalisation en batch (« couche *BN* » pour batch normalization) avant chaque couche non-linéaire NL, de sorte à accélérer l'apprentissage.

La fonction d'activation de couche non linéaire *NL* est typiquement la fonction *ReLU* (Rectified Linear Unit, i.e. Unité de Rectification Linéaire) qui est égale à *f(x)* = *max(0, x*) et la couche de pooling (noté *POOL*) la plus utilisée est la fonction *AvgPool* qui correspond à une moyenne entre les valeurs d'un carré (on met en commun plusieurs valeurs en une seule).

La couche de convolution, notée *CONV,* et la couche entièrement connectée, notée *FC*, correspondent généralement à un produit scalaire entre les neurones de la couche précédente et les poids du CNN.

De façon générale, un CNN comprend typiquement un ensemble de couches de convolution successives. De façon connue et comme expliquée avant, chacune desdites couches de convolution peut être suivie d'une couche de normalisation en batch *BN* et/ou d'une couche non-linéaire, en particulier *ReLU,* préférentiellement les deux dans cet ordre.

Les architectures typiques de CNN empilent quelques paires de couches *CONV* → *NL* puis ajoutent une couche *POOL* et répètent ce schéma *[(CONV* → *NL)^{p}* → *POOL]* jusqu'à obtenir un vecteur de sortie de taille suffisamment petite, puis terminent par deux couches entièrement connectées FC.

Voici une architecture CNN typique :

*INPUT* → *[[CONV* → *NL]^{p}* → *POOL]ⁿ* → *FC* → *FC*

Avantageusement, la détermination directe de l'écart angulaire d'orientation est vue comme une classification « pure » de l'image d'entrée, i.e. le problème est quantifié, sans qu'aucune tâche de détection d'objet ne soit impliquée.

En d'autres termes, ce CNN de classification ne prédit aucune boite englobante ni n'estime directement des valeurs précises d'écart angulaire d'orientation candidat, mais identifie directement au moins une classe potentielle d'écart angulaire d'orientation de ladite image d'entrée par rapport à l'orientation de référence parmi une pluralité de classes potentielles d'écart angulaire prédéterminées, chaque classe potentielle d'écart angulaire étant associée à une valeur d'écart angulaire représentative de la classe (qui sera la valeur prise en compte lorsqu'une classe sera identifiée). Par « directement », on entend comme évoqué que le présent CNN associe à l'image d'entrée une ou plusieurs classifications sans traitement préalable. Cela s'entend par opposition aux CNN évoqués de type Faster R-CNN dans lesquels le bloc de détection (tel que VGG-16) propose des boites englobantes candidates, lesquelles font chacune l'objet d'une sélection et d'une classification, en d'autres termes la classification est mise en oeuvre sur les boites candidates (i.e. indirectement) et non directement l'image comme un tout. Naturellement, tout CNN produit un certain nombre d'états internes que sont des cartes de caractéristiques (feature maps), y compris dans le présent cas de classification dite « directe », mais de telles features maps tiennent du fonctionnement normal de tout CNN, par contraste avec les résultats intermédiaires que sont les boites englobantes candidates d'un CNN de détection.

On comprendra également que le présent CNN associe à l'image d'entrée uniquement les classifications (comme l'on verra généralement sous la forme d'un score de confiance), mais pas d'autres sorties telles que des coordonnées de boites englobantes voire une image annotée.

Chaque classe est en particulier définie par un intervalle (préférentiellement continu, mais éventuellement une union discontinue de sous-intervalles continus) d'écarts angulaires, et la valeur d'écart angulaire représentative de la classe est alors typiquement la valeur moyenne de l'intervalle. Par exemple, un intervalle [10°,20°] peut être associé à la valeur 15°. L'ensemble des intervalles forme préférentiellement une partition d'une plage d'écarts angulaires d'orientations possibles (dont on répète qu'elle peut être d'étendue 360°, ou moins).

Selon une première possibilité, les intervalles définissant les classes font tous la même taille. Par exemple on peut considérer 360 classes de 1 degrés chacune (par exemple, [2°,3°] est un intervalle), ou encore 60 classes de 6 degrés chacune (par exemple [6°,12°] est un intervalle).

Selon une deuxième possibilité, les intervalles définissant les classes présentent des tailles différentes, en particulier selon une densité de probabilité. Par exemple, pour une application de type capteur d'empreintes digitales de smartphone il est, comme expliqué, beaucoup plus probable d'avoir un écart d'orientation de l'ordre de 10°-20° qu'un écart de 90°-100°. On peut ainsi prévoir dans une telle application des intervalles plus étroits pour les petits écarts que pour les grands écarts, par exemple d'un côté [2°,4°], et de l'autre côté [90°, 105°]. L'homme du métier saura construire n'importe quel ensemble de classes d'écarts d'orientation de son choix.

On comprend que les valeurs estimées d'écart angulaire candidat sont des valeurs théoriques fonctions des classes, et plus précisément des valeurs d'écart angulaire représentatives des classes. Ainsi, pour une image d'empreinte donnée, le CNN identifie une ou plusieurs classes candidates, i.e. définies par un intervalle susceptible de contenir la valeur réelle de l'écarte angulaire d'orientation de cette image par rapport à l'orientation de référence (on note que plusieurs classes peuvent être identifiées, voir plus loin, bien qu'en pratique l'écart angulaire réel présente une valeur unique), et pour chaque classe identifiée, on considère la valeur d'écart angulaire représentative de la classe comme un écart angulaire candidat estimé à l'étape (a).

Par exemple, dans un mode de réalisation à 60 classes de taille égale, avec une image d'entrée présentant un écart angulaire d'orientation réel de 11°, alors la classe correspondant à l'intervalle [6, 12°] est identifiée, et si la valeur représentative de cette classe est 9° (cas de la moyenne), alors la valeur estimée de l'écart angulaire candidat est 9°.

Une pluralité de classes peut être identifiée si le CNN renvoie en sortie un vecteur d'orientation, i.e. un score pour chacune des classes. Plus précisément, le vecteur d'orientation d'une image d'entrée associe à chacune de la pluralité de classes un score représentatif de la probabilité d'appartenance de ladite donnée d'entrée à la classe d'écart angulaire potentiel, en d'autres termes de la probabilité que l'écart angulaire d'orientation réel appartienne à l'intervalle correspondant. Le vecteur a donc une dimension égale au nombre de classes, i.e. 60 dans notre exemple. On comprend qu'un CNN de classification tel que défini ci-avant ne renvoie préférentiellement que le vecteur d'orientation, par opposition à un CNN de détection.

Comme l'on verra plus loin, la ou les classes identifiées peuvent être les *k* (par exemple deux) présentant un score le plus élevé (i.e. on identifie un nombre fixe de classes), soient toutes celles présentant un score au-delà d'un seuil prédéterminé (par exemple probabilité supérieure à 10%, voire probabilité supérieure à 20%, en fonction de la flexibilité désirée et du « risque » d'avoir des images d'entrée mal orientées. Par exemple, pour un scanner d'empreintes latentes, on pourra baisser le seuil de sorte à maximiser le nombre de pics pris en considération du fait de l'éventuelle multiplicité d'orientations plausibles).

Ledit CNN peut être de nombreux types, et notamment être un CNN conventionnel (succession directe de couches de convolution *CONV,* couches de normalisation en batch *BN,* et couches non-linéaires *NL*).

Selon un mode de réalisation préféré, ledit CNN est de type réseau résiduel. On constate que de tels réseaux résiduels sont très efficaces pour la tâche unique de classification de l'image d'entrée qui leur est dévolue, et bien plus légers que les CNN de détection dont les blocs tels que VGG-16 ou VGG-19 de traitement d'image sont particulièrement massifs.

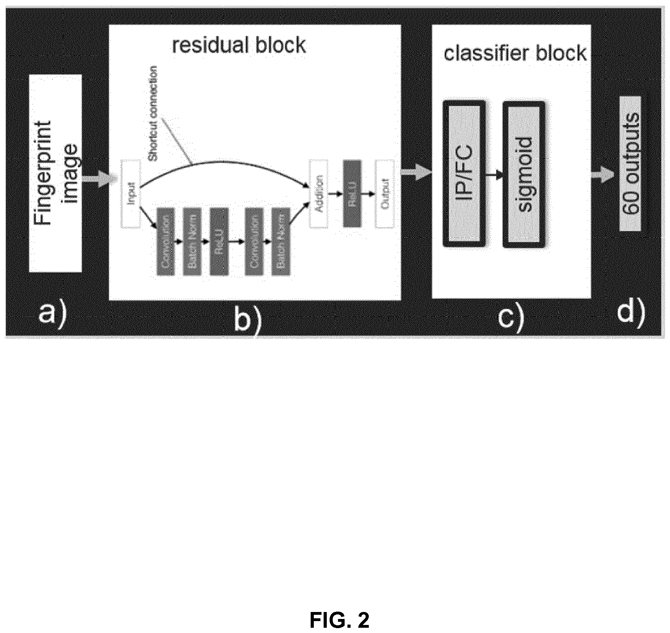

En référence à la **figure 2****,** un réseau résiduel, ou RESNET, est un CNN présentant au moins une « connexion résiduelle » (en anglais « skip connection » ou simplement « short-cut »), c'est-à-dire une connexion de qui vient « court-circuiter » au moins une couche, par analogie à ce qu'on constate dans les neurones pyramidaux du cerveau.

En effet, lorsque l'on complexifie un modèle en lui rajoutant des couches, il arrive que certaines de ces couches impactent négativement les performances du modèle. Les connexions résiduelles garantissent que à défaut d'apprendre une transformation utile une couche doit au pire apprendre l'identité, cela évite de dégrader les performances des autres couches. Le principe de fonctionnement à la base des réseaux résiduels est d'additionner point par point l'entrée et la sortie d'une couche de convolution, cela permet de propager le signal des couches moins profondes vers les couches les plus profondes. Ce réseau apporte comme expliqué d'excellents résultats en détermination directe d'écart angulaire d'orientation, et en particulier en classification pure.

Dans le RESNET exemple de la figure 2, de façon classique on a dans la branche principale (court-circuité par la connexion résiduelle) une pluralité de couches de convolutions chacune suivie d'une couche de normalisation en batch et/ou d'une couche non-linéaire de type *ReLU.* La sortie de cette branche est typiquement ajoutée point par point avec l'image d'entrée (du fait de la connexion résiduelle), et passe par une dernière couche d'activation de type *ReLU,* avec une réduction de dimensionnalité (typiquement *MaxPool*).

Une couche entièrement connectée (IP/FC) permet la génération du vecteur d'orientation (i.e. la classification à proprement parler), et on peut utiliser une fonction de coût (« loss ») de type *Sigmoïde* ou *Softmax* pour l'apprentissage, voir plus loin.

### Apprentissage et classification

Avantageusement, le procédé commence par une étape (a0) d'apprentissage, par les moyens de traitement de données 11 du serveur 1, à partir d'une base d'images d'empreintes digitales étiquetées (i.e. pour laquelle est connue la classe d'écart angulaire d'orientation correspondante), de paramètres dudit CNN.

Cet apprentissage peut être réalisé de façon classique, en minimisant la fonction de coût.

La principale difficulté de la présente approche est d'extraire les caractéristiques pertinentes à la détermination de l'écart angulaire attendu, tout en pénalisant les caractéristiques ne permettant pas de discriminer les classes. Pour ce faire une première possibilité est d'utiliser une entropie croisée sur une Softmax comme fonction de coût, car elle permet en effet d'extraire les caractéristiques qui maximisent la probabilité de l'écart angle attendu et elle pénalise la probabilité des autres écarts d'angles (i.e. des autre classes).

La fonction Softmax ne privilégie qu'une seule classe, alternativement si l'on souhaite augmenter les chances d'avoir plusieurs classes identifiées, on peut utiliser comme fonction de coût une Sigmoïde pour privilégier non seulement l'écart angulaire d'orientation attendu, mais aussi, avec une plus faible probabilité, ceux qui sont les plus proches.

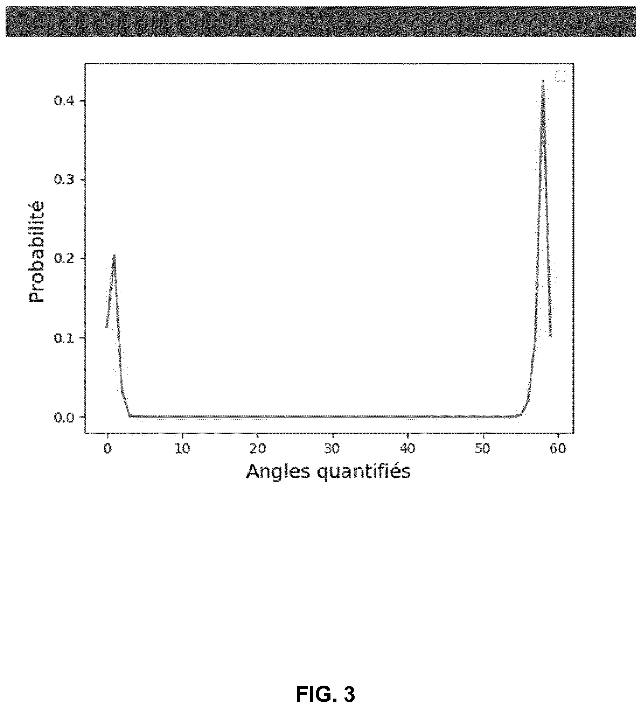

Ainsi, si l'image d'entrée est partielle et présente par exemple une partie (par exemple une boucle) pouvant se trouver par exemple à droite ou à gauche d'une empreinte, le vecteur d'orientation présentera deux pics distincts de scores, voir par exemple la **figure 3****,** de sorte à prendre en compte les deux cas possibles, qui restent chacun probables.

A noter que ladite base d'images d'empreintes digitales déjà étiquetées peut être obtenue par augmentation de données. Plus précisément, on part d'une base de référence dans laquelle les images sont toutes orientées conformément à l'orientation de référence (i.e. écart angulaire d'orientation nul). On génère alors artificiellement d'autres version de ces empreintes de référence en leur appliquant des rotations divers angles donnés (et on les étiquette en conséquence), de sorte à créer de nouvelles images d'apprentissage présentant des écarts d'orientation variés. Par exemple, on leur applique des angles de ± [5°, 10°, 20°, 30°, 40°, 70°, 120°], de sorte à créer une nouvelle base 14 fois plus grande, pour assurer la robustesse du CNN à des défauts d'acquisition usuels.

Le CNN appris peut être stocké le cas échéant sur des moyens de stockage de données 22 du client 2 pour utilisation en estimation d'orientation. A noter que le même CNN peut être embarqué sur de nombreux clients 2, un seul apprentissage est nécessaire.

Dans une étape (a) principale, comme expliqué au moins un écart angulaire candidat d'une orientation de ladite image d'entrée par rapport à une orientation de référence est estimé par les moyens de traitement de données 21 du client 2 au moyen du CNN embarqué.

Ensuite, dans une étape (b), ladite image d'entrée est recalée en fonction dudit écart angulaire candidat estimé, de sorte que l'orientation de l'image recalée coïncide avec ladite orientation de référence. On note qu'une image recalée peut être générée à l'étape (b) pour chaque écart angulaire candidat estimé. L'idée est que si plusieurs pics de probabilité émergent on ne peut pas savoir lequel est le bon, et on les essaie tous. Ainsi, une des images recalées sera « bien recalée » i.e. orientée conformément à l'orientation de référence.

Enfin, dans une étape (c), ladite image recalée peut être traitée de sorte à extraire lesdites caractéristiques recherchées de l'empreinte digitale représentée par ladite image d'entrée, lesquelles peuvent notamment comprendre la position et/ou l'orientation de minuties. Si plusieurs images recalées ont été générées, l'étape (c) est mise en oeuvre pour chacune. En particulier, cette étape (c) peut être mise en oeuvre au moyen d'un deuxième CNN dédié, prenant en entrée chaque image recalée. On parle alors de CNN de recalage pour le premier CNN, et de CNN de codage pour le deuxième. On pourra ici utiliser n'importe quel CNN de codage connu.

A noter que l'étape (c) peut également être mise en oeuvre systématiquement sur l'image d'entrée « telle quelle », i.e. sans recalage (en d'autres termes, l'images d'entrée est ajoutée avec les images recalées). En effet si l'image d'entrée est déjà bien orientée, le CNN peut avoir tendance à la recaler quand même, ce qui peut mener à une légère baisse de performances.

De façon préférée, le procédé comprend en outre une étape (d) d'identification ou d'authentification dudit individu par comparaison des caractéristiques recherchées extraites de l'empreinte digitale représentée par ladite image d'entrée, avec les caractéristiques d'empreintes digitales de référence, qui pourra être mise en oeuvre de n'importe quelle façon connue de l'homme du métier.

Par exemple, le client 2 peut stocker les caractéristiques des empreintes d'un ou plusieurs utilisateurs autorisés comme empreintes de référence, de sorte à gérer le déverrouillage de l'équipement client 2 (en particulier dans le cas d'une image d'entrée acquise directement par un scanner 23 intégré) : si les caractéristiques extraites correspondent à celles attendues d'un utilisateur autorisé, les moyens de traitement de données 21 considèrent que l'individu qui tente de s'authentifier est autorisé, et procèdent au déverrouillage.

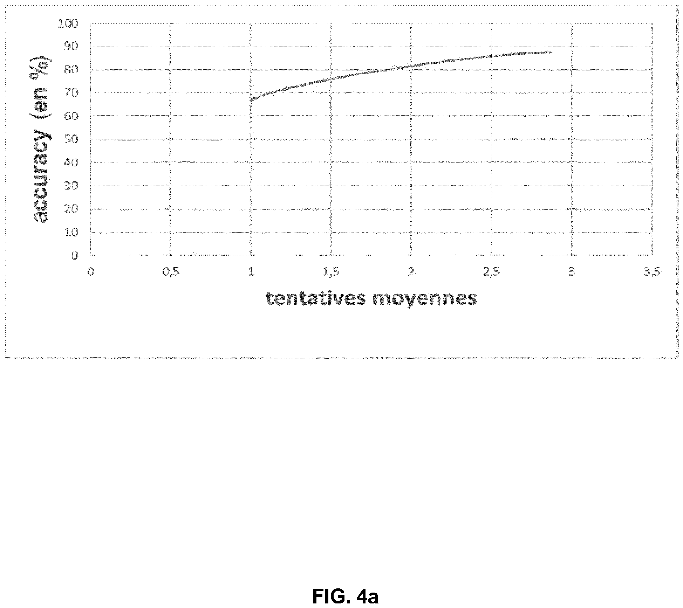

Alternativement, le client 2 peut envoyer les caractéristiques extraites à une base de données distante desdites caractéristiques d'empreintes digitales de référence, pour identification de l'individu
Différents tests du présent procédé ont été mis en oeuvre. Sur la figure 4a, on voit la performance du CNN de recalage en prédiction d'écart angulaire d'orientation en fonction du nombre moyen de tentatives, i.e. le nombre moyen d'images recalées obtenu. On observe une hausse de la précision jusqu'à près de 90% lorsqu'on passe d'une tentative (i.e. seul le plus fort pic est considéré), à 2.8 tentatives en moyenne.

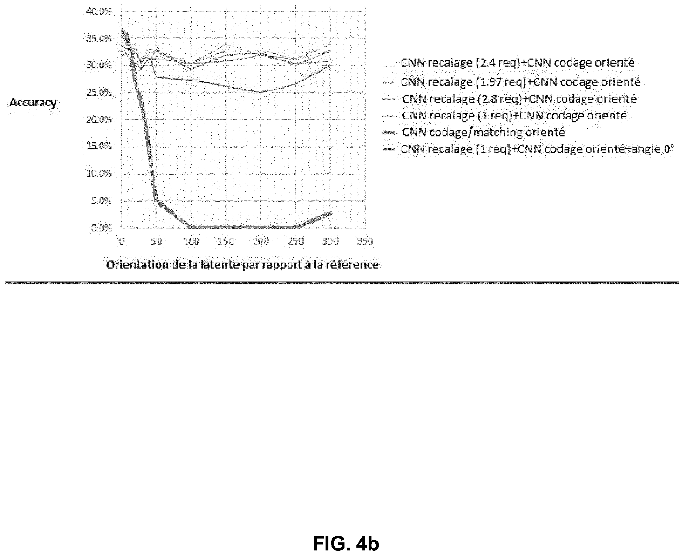

La figure 4b montre les performances en matching, en fonction de l'écart angulaire d'orientation réel : on voit qu'en l'absence de recalage (un seul CNN de codage utilisé directement pour l'extraction de caractéristiques), les performances s'écroulent dès quelques degrés d'écart.

Par contre, les diverses configurations testées, qui comprennent toutes un premier CNN de recalage et un deuxième CNN de codage, et qui diffèrent par le nombre de tentatives moyen, montrent un maintien des performances quel que soit l'écart angulaire d'orientation. Le mode de réalisation comprenant en outre l'utilisation systématique de l'images d'entrée (non recalée) est un peu moins efficace pour des grands écarts d'orientation (puisqu'alors l'image d'entrée n'est pas pertinente), mais plus efficace si l'écart angulaire d'orientation est faible, ce qui reste un cas fréquent.

### Produit programme d'ordinateur

Selon un deuxième et un troisième aspects, l'invention concerne un produit programme d'ordinateur comprenant des instructions de code pour l'exécution (en particulier sur les moyens de traitement de données 11, 21 du serveur 1 et/ou du client 2) d'un procédé d'extraction de caractéristiques recherchées d'une empreinte digitale représentée par une image d'entrée, ainsi que des moyens de stockage lisibles par un équipement informatique (une mémoire 12, 22 du serveur 1 et/ou du client 2) sur lequel on trouve ce produit programme d'ordinateur.

## Revendications

1. Procédé d'extraction de caractéristiques recherchées d'une empreinte digitale représentée par une image d'entrée, le procédé étant **caractérisé en ce qu'**il comprend la mise en oeuvre, par des moyens de traitement de données (21) d'un équipement client (2), d'étapes de :
(a) Au moyen d'un réseau de neurones à convolution, CNN, de type réseau résiduel, estimation directe tel que ledit CNN ne met en oeuvre aucune tâche de détection d'objet dans l'image d'entrée, à partir de l'image d'entrée, d'au moins un écart angulaire candidat d'une orientation de ladite image d'entrée par rapport à une orientation de référence ;
(b) Recalage de ladite image d'entrée en fonction dudit écart angulaire candidat estimé, de sorte que l'orientation de l'image recalée coïncide avec ladite orientation de référence ;
(c) Traitement de ladite image recalée de sorte à extraire lesdites caractéristiques recherchées de l'empreinte digitale représentée par ladite image d'entrée.

2. Procédé selon la revendication 1, dans lequel l'étape (a) comprend l'identification directe d'au moins une classe potentielle d'écart angulaire d'orientation de ladite image d'entrée par rapport à l'orientation de référence parmi une pluralité de classes potentielles d'écart angulaire prédéterminées, chaque classe potentielle d'écart angulaire étant associée à une valeur d'écart angulaire représentative de la classe, le ou les écarts angulaire candidats estimés ayant pour valeurs la ou les valeurs représentatives de la ou les classes identifiées.

3. Procédé selon la revendication 2, dans lequel chaque classe est définie par un intervalle de valeurs d'écart angulaire.

4. Procédé selon la revendication 3, dans lequel lesdits intervalles sont continus et forment une partition d'une plage donnée d'écarts angulaire d'orientation possibles.

5. Procédé selon la revendication 4, dans lequel lesdits intervalles sont tous de même taille.

6. Procédé selon l'une des revendications 2 à 5, dans lequel l'étape (a) comprend la détermination d'un vecteur d'orientation de ladite image d'entrée associant à chacune de ladite pluralité de classes potentielles d'écart angulaire un score représentatif de la probabilité d'appartenance de ladite donnée d'entrée à ladite classe potentielle d'écart angulaire.

7. Procédé selon l'une des revendications 2 à 6, comprenant une étape (a0) préalable d'apprentissage, par des moyens de traitement de données (11) d'un serveur (1), à partir d'une base d'images d'empreintes digitales déjà associée chacune à une classe de ladite pluralité de classes potentielles d'écart angulaire prédéterminées, de paramètres dudit CNN.

8. Procédé selon la revendication 7, dans lequel ledit apprentissage utilise une fonction de coût de type Sigmoïde.

9. Procédé selon l'une des revendications 1 à 8, dans lequel une image recalée est générée à l'étape (b) pour chaque écart angulaire candidat estimé, l'étape (c) étant mise en oeuvre pour chaque image recalée.

10. Procédé selon l'une des revendications 1 à 9, dans lequel l'étape (c) est également mise en oeuvre sur l'image d'entrée non recalée.

11. Procédé selon l'une des revendications 1 à 10, dans lequel lesdites caractéristiques recherchées à extraire de l'empreinte digitale représentée par ladite image d'entrée comprennent la position et/ou l'orientation de minuties.

12. Procédé selon l'une des revendications 1 à 11, dans lequel ladite empreinte digitale représentée par l'image d'entrée est celle d'un individu, le procédé comprenant en outre une étape (d) d'identification ou d'authentification dudit individu par comparaison des caractéristiques recherchées extraites de l'empreinte digitale représentée par ladite image d'entrée, avec les caractéristiques d'empreintes digitales de référence.

13. Produit programme d'ordinateur comprenant des instructions de code pour l'exécution d'un procédé selon l'une des revendications 1 à 12 d'extraction de caractéristiques recherchées d'une empreinte digitale représentée par une image d'entrée, lorsque ledit programme est exécuté sur un ordinateur.

14. Moyen de stockage lisible par un équipement informatique sur lequel un produit programme d'ordinateur comprend des instructions de code pour l'exécution d'un procédé selon l'une des revendications 1 à 12 d'extraction de caractéristiques recherchées d'une empreinte digitale représentée par une image d'entrée.

## Patentansprüche

1. Verfahren zur Extraktion von gesuchten Merkmalen eines durch ein Eingangsbild dargestellten Fingerabdrucks, wobei das Verfahren **dadurch gekennzeichnet ist, dass** es die Durchführung, durch Datenverarbeitungseinrichtungen (21) einer Client-Ausrüstung (2), von Schritten enthält:
(a) direkte Schätzung ausgehend vom Eingangsbild mindestens einer Kandidat-Winkelabweichung einer Ausrichtung des Eingangsbilds bezüglich einer Bezugsausrichtung mittels eines neuronalen Faltungsnetzwerks, CNN, vom Typ Restnetzwerk, derart, dass das CNN keine Objekterkennungsaufgabe im Eingangsbild durchführt;
(b) Neueinstellung des Eingangsbilds abhängig von der geschätzten Kandidat-Winkelabweichung, so dass die Ausrichtung des neueingestellten Bilds mit der Bezugsausrichtung zusammenfällt;
(c) Verarbeitung des neueingestellten Bilds, um die gesuchten Merkmale des vom Eingangsbild dargestellten Fingerabdrucks zu extrahieren.

2. Verfahren nach Anspruch 1, wobei der Schritt (a) die direkte Identifizierung mindestens einer potentiellen Ausrichtungs-Winkelabweichungsklasse des Eingangsbilds bezüglich der Bezugsausrichtung unter einer Vielzahl von potentiellen vorbestimmten Winkelabweichungsklassen enthält, wobei jede potentielle Winkelabweichungsklasse einem für die Klasse repräsentativen Winkelabweichungswert zugeordnet ist, wobei die geschätzte(n) Kandidat-Winkelabweichung(en) als Werte den oder die für die identifizierte (n) Klasse (n) repräsentativen Werte haben.

3. Verfahren nach Anspruch 2, wobei jede Klasse durch ein Intervall von Winkelabweichungswerten definiert wird.

4. Verfahren nach Anspruch 3, wobei die Intervalle kontinuierlich sind und eine Unterteilung eines gegebenen Bereichs von möglichen Ausrichtungs-Winkelabweichungen bilden.

5. Verfahren nach Anspruch 4, wobei die Intervalle alle die gleiche Größe haben.

6. Verfahren nach einem der Ansprüche 2 bis 5, wobei der Schritt (a) die Bestimmung eines Ausrichtungsvektors des Eingangsbilds enthält, der jeder der Vielzahl von potentiellen Winkelabweichungsklassen einen für die Wahrscheinlichkeit der Zugehörigkeit des Eingangsdatenwerts zur potentiellen Winkelabweichungsklasse repräsentativen Score zuordnet.

7. Verfahren nach einem der Ansprüche 2 bis 6, das einen vorhergehenden Schritt (a0) eines Lernvorgangs, durch Datenverarbeitungseinrichtungen (11) eines Servers (1), ausgehend von einer Bank von Fingerabdruckbildern, die bereits je einer Klasse der Vielzahl von potentiellen vorbestimmten Winkelabweichungsklassen zugeordnet sind, von Parametern des CNN enthält.

8. Verfahren nach Anspruch 7, wobei der Lernvorgang eine Kostenfunktion vom Typ Sigmoid verwendet.

9. Verfahren nach einem der Ansprüche 1 bis 8, wobei ein neueingestelltes Bild im Schritt (b) für jede geschätzte Kandidat-Winkelabweichung generiert wird, wobei der Schritt (c) für jedes neueingestellte Bild durchgeführt wird.

10. Verfahren nach einem der Ansprüche 1 bis 9, wobei der Schritt (c) ebenfalls am nicht neueingestellten Eingangsbild durchgeführt wird.

11. Verfahren nach einem der Ansprüche 1 bis 10, wobei die aus dem vom Eingangsbild dargestellten Fingerabdruck zu extrahierenden gesuchten Merkmale die Position und/oder die Ausrichtung von Minutien enthalten.

12. Verfahren nach einem der Ansprüche 1 bis 11, wobei der vom Eingangsbild dargestellte Fingerabdruck derjenige einer Person ist, wobei das Verfahren außerdem einen Schritt (d) der Identifizierung oder Authentifizierung der Person durch Vergleich der aus dem vom Eingangsbild dargestellten Fingerabdruck extrahierten gesuchten Merkmale mit den Bezugsmerkmalen von Fingerabdrücken enthält.

13. Computerprogrammprodukt, das Codeanweisungen für die Ausführung eines Verfahrens nach einem der Ansprüche 1 bis 12 zur Extraktion von gesuchten Merkmalen eines von einem Eingangsbild dargestellten Fingerabdrucks enthält, wenn das Programm auf einem Computer ausgeführt wird.

14. Speichereinrichtung, die von einer Informatikausrüstung lesbar ist, auf der ein Computerprogramm Codeanweisungen für die Ausführung eines Verfahrens nach einem der Ansprüche 1 bis 12 zur Extraktion von gesuchten Merkmalen eines von einem Eingangsbild dargestellten Fingerabdrucks enthält.

## Claims

1. Method for extracting desired features of a fingerprint represented by an input image, the method being **characterised in that** it comprises implementing, by data processing means (21) of a client device ( 2), steps of:
(a) directly estimating, by means of a convolutional neural network (CNN) of the residual type, from the input image, at least one candidate angular deviation of an orientation of said input image relative to a reference orientation;
(b) recalibrating said input image as a function of said estimated candidate angular deviation, so that the orientation of the recalibrated image matches said reference orientation;
(c) processing said recalibrated image so as to extract said desired features of the fingerprint represented by said input image.

2. Method according to Claim 1, wherein step (a) comprises identifying at least one potential class of angular orientation deviation of said input image relative to the reference orientation from among a plurality of predetermined potential classes of angular deviation, with each potential class of angular deviation being associated with an angular deviation value representing the class, with the one or more estimated candidate angular deviations having the one or more values representing the one or more identified classes as values.

3. Method according to Claim 2, wherein each class is defined by an interval of angular deviation values.

4. Method according to Claim 3, wherein said intervals are continuous and form a partition of a given range of potential angular orientation deviations.

5. Method according to Claim 4, wherein said intervals are all the same size.

6. Method according to any of Claims 2 to 5, wherein step (a) comprises determining an orientation vector of said input image associating a score with each of said plurality of potential angular deviation classes representing the probability that said input data belongs to said potential angular deviation class.

7. Method according to any of Claims 2 to 6, comprising a prior step (a0) of learning parameters of said CNN, which step is implemented by data processing means (11) of a server ( 1), on the basis of a fingerprint image database where each image is already associated with a class of said plurality of predetermined potential classes of angular deviation.

8. Method according to Claim 7, wherein said learning uses a Sigmoid-type cost function.

9. Method according to any of Claims 1 to 8, wherein a recalibrated image is generated in step (b) for each estimated candidate angular deviation, with step (c) being implemented for each recalibrated image.

10. Method according to any of Claims 1 to 9, wherein step (c) is also carried out on the non-recalibrated input image.

11. Method according to any of Claims 1 to 10, wherein said desired features that are to be extracted of the fingerprint represented by said input image include the position and/or the orientation of minutia.

12. Method according to any of Claims 1 to 11, wherein said fingerprint represented by the input image is that of an individual, the method further comprising a step (d) of identifying or authenticating said individual by comparing extracted desired features of the fingerprint represented by said input image with the features of reference fingerprints.

13. Computer program product comprising code instructions for executing a method according to any of Claims 1 to 12 for extracting desired features of a fingerprint represented by an input image, when said program is executed on a computer.

14. Computer-readable storage means, on which a computer program product comprises code instructions for executing a method according to any of Claims 1 to 12 for extracting desired features of a fingerprint represented by an input image.
